# EUROPEAN PATENT APPLICATION

(11) **EP 3 514 422 A2**
(43) Date of publication of application: **24.07.2019**
(21) Application number: 18248190.3
(22) Date of filing: 28.12.2018
(51) Int. Cl.: F16K 31/04, F16K 31/05

(54) **ADAPTORS AND LINKAGES FOR ACTUATORS AND VALVES**

(30) Priority: 02.01.2018 US 201815860437
(71) Applicant: Johnson Controls Technology Company, Auburn Hills, Michigan 48326-2773 (US)
(72) Inventor: KUMAR, Anil, 283102 Uttar Pradesh (IN); BHONGADE, Parag Jivanrao, Maharashtra (IN); DOKE, Lakhan Shivaji, 411033 Maharashtra (IN); VETAL, Amol Ramdas, 411014 Maharashtra (IN); CHORGHE, Yogesh Subhash, 412205 Maharashtra (IN); PAWAR, Bhausaheb Uttam, 411043 Maharashtra (IN); KANNAN, Madan Kumar Kamala, 560008 Karnataka (IN); BIDILA, Ujjain Kumar, 500026 Telangana (IN); KARUKOLA, Umamaheshwararao, 530007 Andhra Pradesh (IN); PATIL, Atul Ramdas, 411036 Pune (IN)
(74) Representative: Trinks, Ole

(57) **Abstract**

A variety of assemblies are configured for use with an actuator. An adaptor includes protrusions configured to engage grooves in a channel wall of the actuator and a snapping structured configured to receive a snapping feature of an output gear. A spring clip rotatably secures a yoke having a yoke slot and an output gear having a circumferential slot in the output channel of the adaptor. A lock clip has an arm and a lock clip, the lock clip having an inner wall shaped to correspond to a polygonal opening that extends through the base ring of a yoke. An adaptor prevents a valve from being coupled to the actuator by a bracket in one or more incorrect orientations, and permits the valve to be coupled to the actuator by the bracket in the correct orientation.

## Description

### CROSS-REFERENCE TO RELATED APPLICATION

This application claims the benefit of and priority to U.S. Application No. 15/860,437, filed January 2, 2018, the entire disclosure of which is incorporated by reference herein.

### BACKGROUND

The present disclosure relates generally to actuators, and more particularly to adaptors and linkages that connect the interior mechanisms of an actuator to a device that the actuator is intended to actuate, for example opening or closing a valve. Actuators are generally electrical, hydraulic, or pneumatic devices that actuate a variety of equipment by moving a movable part of that equipment between two or more positions. For example, actuators can be used to actuate a damper, a valve, a mechanical linkage or assembly, or any other type of mechanism or system. An actuator may transfer a rotation or other force to the mechanism, such as a valve, through a final output gear. The final output gear may be linked to the valve via a linkage system. Linkage systems may be required to be air-tight or water-tight to protect the inner workings of the actuator while also transferring force or torque to the valve. When the valve is properly engaged with the actuator, a rotation created by the actuator can cause a rotation of the valve between two positions, for example an open position and a closed position. The linkage system can include the output gear, a yoke or adaptor, and a stroke, spacer, bracket, or other connector.

Conventional linkage system may also include screws, tension plates, and a variety of other components that add to the production cost and assembly time for an actuator system. In some case, assembly requires specialty tools and expertise, and disassembly may be difficult or impossible without breaking one or more components of the linkage system. Making a change to the linkage system, actuator, or valve may therefore be difficult, destructive, or time-consuming. Further, conventional linkage systems may allow the valve to be installed in an incorrect orientation relative to the actuator, causing a high frequency of installation errors.

### SUMMARY

One embodiment of the present disclosure relates to an actuator that has a body, an output gear, and an adaptor. The body has an output channel defined by a channel wall. The channel wall has one or more grooves. The output gear has a snapping feature. The adaptor includes a cylinder defined by an adaptor wall and configured to be received by the output channel. One or more protrusions protrude from the adaptor wall and are configured to engage the one or more grooves. A snapping structure is positioned at an actuator end of the cylinder and is configured to receive the snapping feature of the output gear.

In some embodiments, the output gear also includes a cog and a spindle. The cylinder is configured to receive the spindle when the snapping structure receives the snapping feature. In some embodiments, the snapping structure is configured to engage the snapping feature to rotatably secure the output gear to the adaptor. In some embodiments, the one or more protrusions engage the one or more grooves to secure the adaptor in the output channel when the output channel receives the adaptor. In some embodiments, the adaptor wall abuts the channel wall to prevent a fluid from entering the body via the output channel when the output channel receives the adaptor.

Another implementation of the present disclosure is an actuator that has a body, an output gear, a yoke, and a spring clip. The body has an output channel defined by an output wall. The output gear has a cog, a middle portion, and a spindle. The middle portion is positioned between the cog and the spindle, and has a circumferential slot. The yoke extends through the output channel. The yoke has a first end inside the body and a yoke slot proximate the first end, and is configured to receive the middle portion and the spindle. The spring clip is configured to engage the yoke slot and the circumferential slot to rotatably secure the output gear to the yoke.

In some embodiments, the spring clip includes an open end, a closed end opposite the open end, and a pair of substantially parallel side rods extending from the open end to the closed end. The spring clip also includes a curved end portion joining the side rods at the closed end and a pair of semicircular hooks. Each hook extends from one of the side rods. In some embodiments, the side rods are configured to be received by the yoke slot and the circumferential slot. In some embodiments, the side rods are configured to flex apart under a force to widen the opening, and the spring clip has a springing quality that returns the side rods to a substantially parallel configuration when the force is absent.

In some embodiments, the actuator also includes a stroke configured to be received by the yoke. The stroke includes a threaded core configured to engage the spindle, an exterior surface, and a rib protruding from the exterior surface.

Another implementation of the present disclosure is an assembly for use with an actuator and valve. The assembly includes a yoke and a lock clip. The yoke includes a base ring, a polygonal opening extending through the base ring, and a yoke cylinder extending from the base ring. The lock clip includes an arm having a free end and a connected end. The lock clip also includes a lock ring positioned within the yoke cylinder. The lock ring includes a substantially circular outer rim and an inner wall shaped to correspond to the polygonal opening. The lock ring extends from the connected end of the arm.

In some embodiments, the lock ring is configured to rotate around an axis of the yoke cylinder between an unlocked position and a locked position. In the unlocked position, the inner wall of the lock ring aligns with the polygonal opening. In the locked position, the inner wall of the lock ring is misaligned with the polygonal opening in the locked position such that a portion of the lock clip protrudes into the polygonal opening.

In some embodiments, the base ring also includes teeth protruding from a circumferential surface of the base ring. The lock clip also includes a tab protruding from the arm, and the tab engages the teeth when the lock clip is in the locked position. In some embodiments, the polygonal opening is configured to receive a stem extending from a valve body. The lock clip engages the stem to secure the valve body to the yoke when the polygonal opening receives the stem and the lock clip is in the locked position. In some embodiments, the yoke also includes linkage features that allow the yoke to be coupled to an actuator.

Another implementation of the present disclosure is an actuator and valve assembly having an actuator, a bracket, and an adaptor. The bracket is coupled to the actuator and is configured to couple a valve to the actuator in a correct orientation and one or more incorrect orientations. The adaptor is positioned between the valve and the bracket. The adaptor prevents the valve from being coupled to the actuator in the one or more incorrect orientations and permits the valve to be coupled to the actuator in the correct orientation.

In some embodiments, the adaptor includes a first feature that ensures that the adaptor can only be positioned in a specific orientation relative to the bracket. The adaptor may also include a second feature that ensures that the adaptor can only be positioned in a particular orientation relative to the valve. The adaptor may also include a structure that connects the first feature and the second feature.

In some embodiments, the adaptor also includes a channel through the structure that allows the bracket to couple the valve to the actuator. In some embodiments, the channel substantially prevents the adaptor from interfering with a transfer of force from the actuator to the valve. In some embodiments, the adaptor is formed from two sections secured together by a snapping feature.

### BRIEF DESCRIPTION OF THE DRAWINGS

- FIG. 1: is a cross-sectional view of an actuator with an output gear and an adaptor, according to an exemplary embodiment.
- FIG. 2: is a view of the actuator of FIG. 1, according to an exemplary embodiment.
- FIG. 3: is a cross-sectional view of a linkage assembly for an actuator, according to an exemplary embodiment.
- FIG. 4: is a perspective view of an output gear for use with the linkage assembly of FIG. 3, according to an exemplary embodiment.
- FIG 5: is a perspective view of a stroke for use with the linkage assembly of FIG. 3, according to an exemplary embodiment.
- FIG. 6: is a perspective view of a yoke for use with the linkage assembly of FIG. 3, according to an exemplary embodiment.
- FIG. 7: is a perspective view of a spring clip for use with the linkage assembly of FIG. 3, according to an exemplary embodiment.
- FIG 8: is a depiction of a method of installing the linkage assembly of FIG. 3, according to an exemplary embodiment.
- FIG. 9: is a perspective view of an actuator, a valve body, and a quick fit assembly, according to an exemplary embodiment.
- FIG. 10: is a perspective view of a yoke for use with the quick fit assembly of FIG. 9, according to an exemplary embodiment.
- FIG. 11: is a perspective view of a lock clip for use with the quick fit assembly of FIG. 9, according to an exemplary embodiment.
- FIG. 12: is a perspective view of the valve body of FIG. 9, according to an exemplary embodiment.
- FIG. 13: is a bottom view of the quick fit assembly of FIG. 9 in an unlocked position, according to an exemplary embodiment.
- FIG. 14: is a bottom view of the quick fit assembly of FIG. 9 in a locked position, according to an exemplary embodiment.
- FIG. 15A: is a perspective view of an actuator and ball valve assembly in a first possible installation configuration, according to an exemplary embodiment.
- FIG. 15B: is a perspective view of an actuator and ball valve assembly in a second possible installation configuration, according to an exemplary embodiment.
- FIG. 15C: is a perspective view of an actuator and ball valve assembly in a third possible installation configuration, according to an exemplary embodiment.
- FIG. 15D: is a perspective view of an actuator and ball valve assembly in a fourth possible installation configuration, according to an exemplary embodiment.
- FIG. 16: is a perspective view of an adaptor for use with the actuator and ball valve assembly of FIGS. 15A-D, according to an exemplary embodiment.
- FIG. 17: is another perspective view of an adaptor for use with the actuator and ball valve assembly of FIGS. 15A-D, according to an exemplary embodiment.
- FIG. 18: is a perspective view of the actuator and ball valve assembly of FIGS. 15A-D with the adaptor of FIGS. 16 and 17, according to an exemplary embodiment.
- FIG. 19: is a perspective view of the adaptor of FIGS. 16-18 with a snapping feature, according to an exemplary embodiment.

### DETAILED DESCRIPTION

### Groove and Snap Lock Adaptor for an Actuator

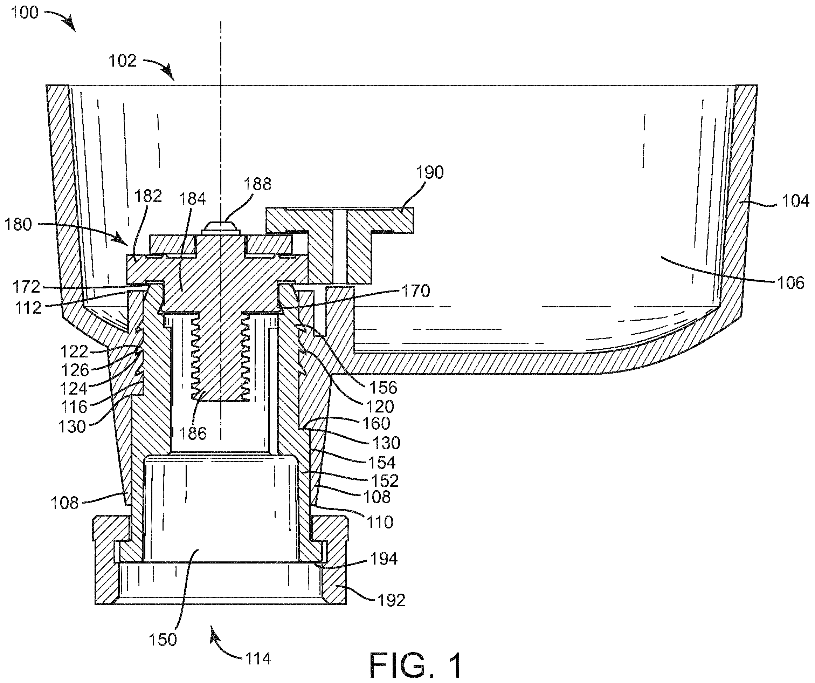

Referring to FIG. 1, a cross-sectional view of an actuator 100 with an output gear 180 and an adaptor 150 is shown, according to an exemplary embodiment. The actuator 100 includes a body 102 that has an outer wall 104 and an interior volume 106. The interior volume 106 may contain any combination of control systems or circuit boards, electrical, hydraulic, pneumatic, or other power systems, gear trains or other mechanical components, or any other elements useful for the operation of actuator 100. A channel wall 108 extends from the outer wall 104, and may be substantially cylindrical with openings at an exterior end 110 and an interior end 112. The channel wall 108 defines an output channel 114 that allows access to the interior volume 106 from outside the actuator 100. The channel wall 108 has an interior surface 116 that runs along the output channel 114. The channel wall 108 may have a uniform thickness or may taper towards the exterior end 110. The interior end 112 may be aligned with the outer wall 104 or may be within the interior volume 106.

The channel wall 108 may also include grooves 120. Grooves 120 are depressions into the interior surface 116 of the channel wall 108. Grooves 120 may run circumferentially around the output channel 114. Grooves 120 may have a roughly triangular cross-sectional shape, such that each groove 120 has an upper surface 122 and a lower surface 124 joined at a point 126. Each groove 120 may be configured such that the point 126, as compared to the upper surface 122 or the lower surface 124, is the closest part of each groove 120 to the exterior end 110 of the channel wall 108. Although FIG. 1 shows the channel wall 108 including three grooves 120, any number of grooves 120 may be included. The channel wall 108 may also include a step or steps 130. Each step 130 is a change in the width of the channel wall 108 corresponding to an increase in size of the output channel 114.

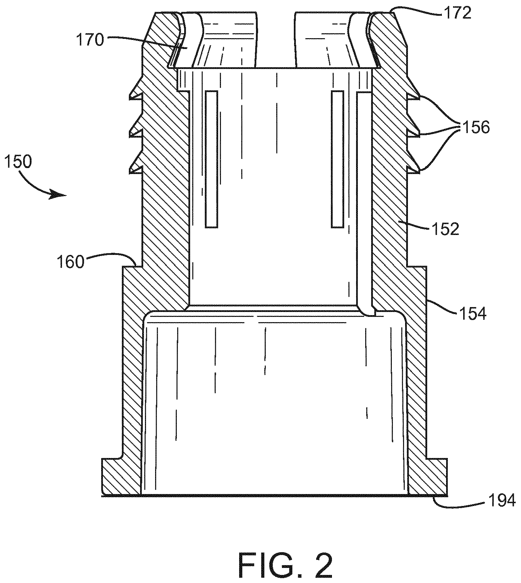

The channel wall 108 may thereby be configured to receive an adaptor 150. Adaptor 150 is shown in detail in FIG. 2, according to an exemplary embodiment. Referring now to FIGS. 1 and 2, the adaptor 150 includes an adaptor wall 152 with an external surface 154 that substantially matches the interior surface 116 of the channel wall 108. Protrusions 156 protrude off of external surface 154. Protrusions 156 may run circumferentially around the adaptor wall 152. Protrusions 156 may have a roughly triangular cross-sectional shape, corresponding to the cross-sectional shape of the grooves 120. The protrusions 156 may be slightly deformable, such that the adaptor 150 may be inserted into the output channel 114 via exterior end 110, sliding snuggly against the interior surface 116 until the protrusions 156 reach the grooves 120. The protrusions 156 may then snap into the grooves 120, with the protrusions 156 substantially filling the grooves 120. When the protrusions 156 fill the grooves 120, the triangular shape of the grooves 120 and the protrusions 156 prevents the adaptor 150 from being removed from the output channel 114 via exterior end 110.

The adaptor wall also includes one or more ledges 160. A sudden change in the diameter of the adaptor 150 creates a ledge 160 oriented orthogonal to the rest of the external surface 154. One or more ledges 160 correspond to the step or steps 130 in the channel wall 108. When the adaptor 150 is inserted into the output channel 114 and the protrusions 156 are received by the grooves 120, the ledges 160 are drawn flush against the steps 130. The ledges 160 may engage the steps 130 to prevent the adaptor 150 from entering into the interior volume 106 of the body 102.

The exterior surface 154, the protrusions 156, and the one or more ledges 160 combine to fit snuggly against the interior surface 116 of the channel walls 108. This snug fit provides a water-tight seal that prevents water from entering the interior volume 106 of the body 102.

The adaptor 150 also includes a snapping structure 170 at an input end 172 of the adaptor 150. The snapping structure 170 is configured to rotatably secure an output gear 180 to the adaptor 150. The output gear 180 includes a cog 182, a snapping feature 184, and a spindle 186. The cog 182, the snapping feature 184, and the spindle 186 may all have a substantially circular cross-sectional shape and may be configured to rotate around a central axis 188 aligned with the output channel 114. The cog 182 may engage with an actuator cog 190 that can provide a force that causes a rotation of the cog 182, the snapping feature 184, and the spindle 186. The snapping feature 184 snaps into the snapping structure 170 to hold the output gear 180 to the adaptor 150 and position the spindle 186 within the output channel 114. The snapping feature 184 and the snapping structure 170 may be configured to allow the output gear 180 to freely rotate around the central axis 188 while preventing rotation about any other axis or translational motion of output gear 180 relative to the adaptor 150.

Because the adaptor 150 may be secured to the channel wall 108, which is a fixed part of the body 102, the output gear 180 may be secured relative to the body 102 by the snapping feature 184 and the snapping structure 170. With this two-part design, no plates, screws, clips, other connector parts, or specialty tools are required to install the adaptor 150 and the output gear 180 on the actuator 100, reducing assembly time and production costs.

FIG. 1 further shows a collar 192 positioned at an output end 194 of the adaptor 150. The collar 192 may be configured to couple a mechanism such as a valve to the adaptor. When a mechanism is coupled to the adaptor 150, the spindle 186 may engage the mechanism, for example through a series of other transfer parts, to transfer a torque or force from the actuator to the mechanism. The actuator 100 can thereby actuate the mechanism as desired.

### Actuator Linkage Assembly Using a Spring Clip

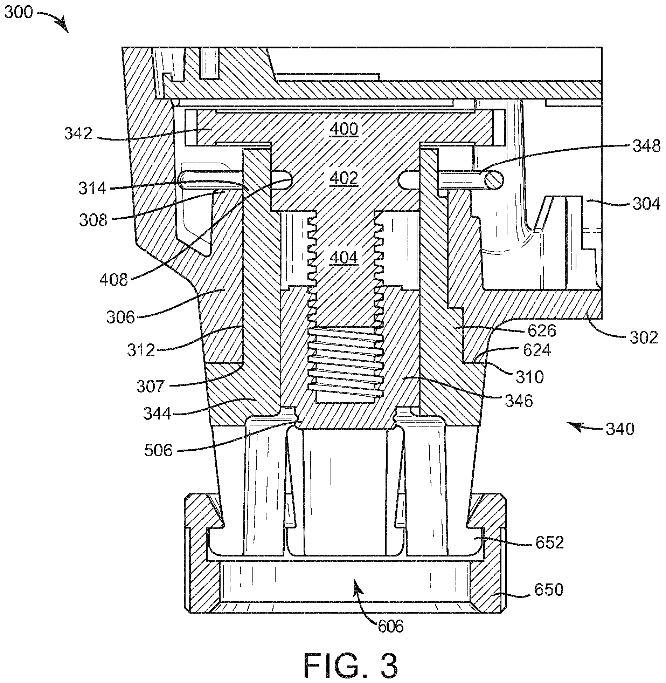

Referring now to FIG. 3, a cross-sectional view of a linkage assembly for an actuator 300 is shown, according to an exemplary embodiment. An actuator 300 has a body wall 302 and an interior volume 304. An output wall 306 protrudes from the body wall, and has an interior end 308 within the interior volume 304 and an exterior end 310 outside of the interior volume 304. The output wall 306 is substantially cylindrical and hollow with openings 307 at the interior end 308 and the exterior end 310. The output wall 306 has an inside surface 312 that defines an output channel 314.

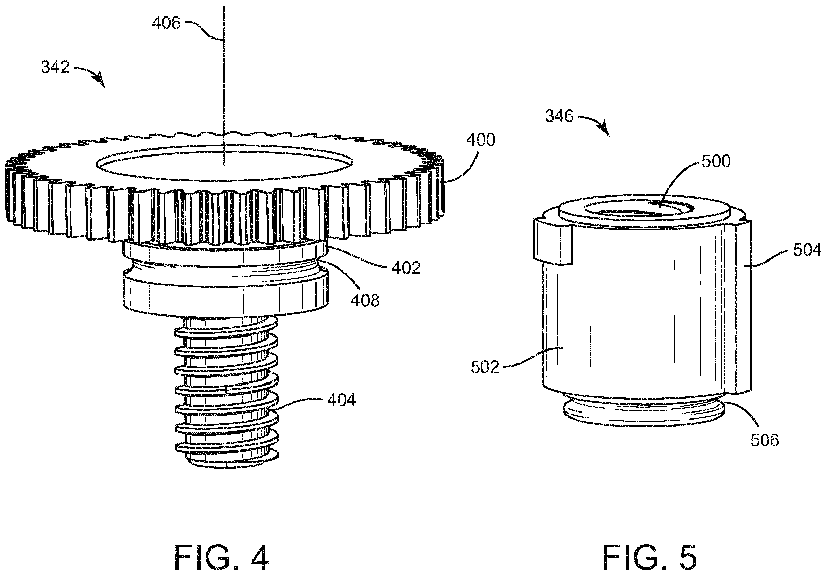

The output channel 314 is shown receiving a linkage assembly 340 that includes an output gear 342, a yoke 344, a stroke 346, and a spring clip 348. The output gear 342, the yoke 344, the stroke 346, and the spring clip 348 are shown from perspective views in FIGS. 4-7 respectively, according to exemplary embodiments. Referring now to FIGS. 3 and 4, the output gear 342 has a cog 400, a middle portion 402, and a spindle 404. The cog 400, the middle portion 402, and the spindle 404 each have a substantially circular cross-section and are centered on a central axis 406. A circumferential slot 408 is depressed into the middle portion 402 and runs around a circumference of the middle portion 402.

The spindle 404 is threaded to engage the stroke 346. Referring now to FIGS. 3 and 5, the stroke 346 is substantially cylindrical and includes a threaded core 500, an exterior surface 502, one or more ribs 504, and a connector 506. The threaded core 500 is configured to engage the spindle 404 to connect the stroke 346 to the spindle 404. The exterior surface 502 is substantially cylindrical, and may have the same radius as the middle portion 402 of the output gear 342. The one or more ribs 504 protrude off the exterior surface 502. The connector 506 extends from a connector end 508 of the stroke 346 and is configured to engage with a valve or other mechanism to be actuated by the actuator 300.

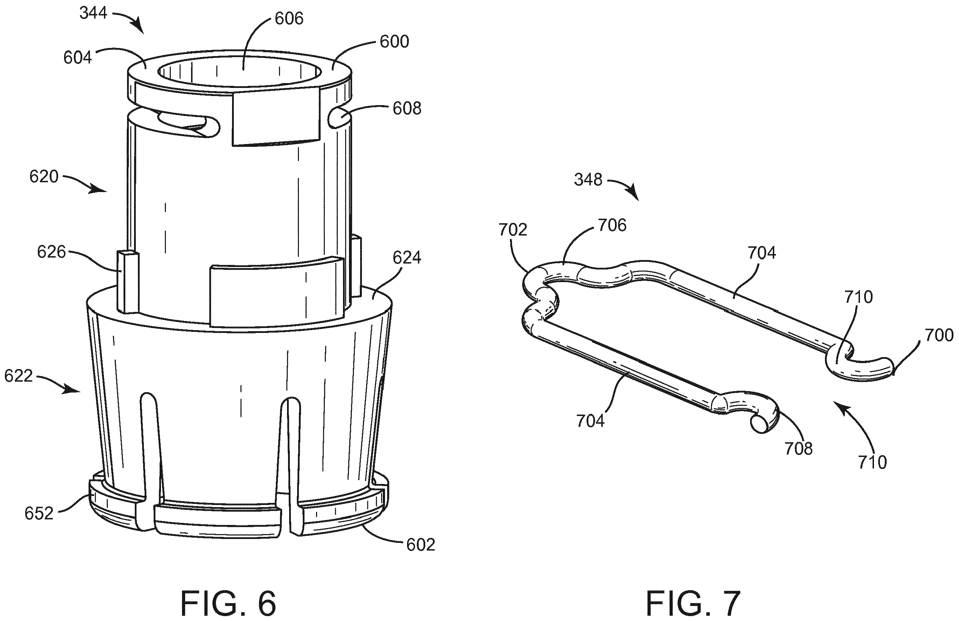

As shown in FIG. 3, the middle portion 402, the spindle 404, and the stroke 346 are received within the yoke 344. Referring now to FIGS. 3 and 6, the yoke 344 is substantially cylindrical and extends from a first end 600 to a second end 602. The yoke 344 is hollow, with a yoke wall 604 defining a central channel 606. A pair of slots 608 extends through the yoke wall 604 proximate the first end 600.

The yoke 344 further includes a first portion 620 and a second portion 622. Both portions 620, 622 may be substantially cylindrical, with the second portion 622 having greater radius than the first portion 620. A ledge 624 marks the transition between the first portion 620 and the second portion 622. The first portion 620 is configured to be inserted into output channel 314, such that the yoke wall 604 fits snuggly against the inside surface 312. Ribs 626 may protrude from the yoke wall 604 along the first portion 620, and may engage with receptacles in the output wall 306 to prevent the yoke 344 from rotating within the output channel 314. The ledge 624 may be positioned flush against the exterior end 310 of the output wall 306. A cuff 650 (shown in FIG. 3) may engage a lip 652. The cuff 650 may be configured to couple the yoke 344 to a mechanism such as a valve.

Spring clip 348 engages both the output gear 342 and the yoke 344, holding the output gear 342 and the yoke 344 to each other and to the actuator 300. Referring now to FIGS. 3 and 7, the spring clip 348 has an open end 700 and a closed end 702. A pair of parallel side rods 704 extends from the open end 700 to the closed end 702. A curved end portion 706 connects the side rods 704 at the closed end 702. The spring clip 348 also includes a pair of semicircular hooks 708, each hook 708 extending from a side rod 704 at the open end 700. The curvature of the hooks 708 is such that an opening 710 at the open end 700 is smaller than the distance between the parallel side rods 704.

The spring clip 348 is configured such that the side rods 704 may be simultaneously received by the circumferential slot 408 in the output gear 342 and the pair of slots 608 in the yoke 344. The opening 710 may be smaller than a diameter of the circumferential slot 408, so that the output gear 342 and the yoke 344 cannot slip through the opening 710. The spring clip 348 may allow the output gear 342 to rotate around axis 406, but restrict the output gear 342 from other rotations or translational motions. Side rods 704 can be flexed apart under a force to widen the opening 710 to install or remove the spring clip 348, but spring back to the parallel orientation shown in FIG. 7 when the force is released. When installed as shown in FIG. 3, the spring clip 348 may rest against the interior end 308 of the output wall 306 to prevent the yoke 344 from sliding out of the output channel 314.

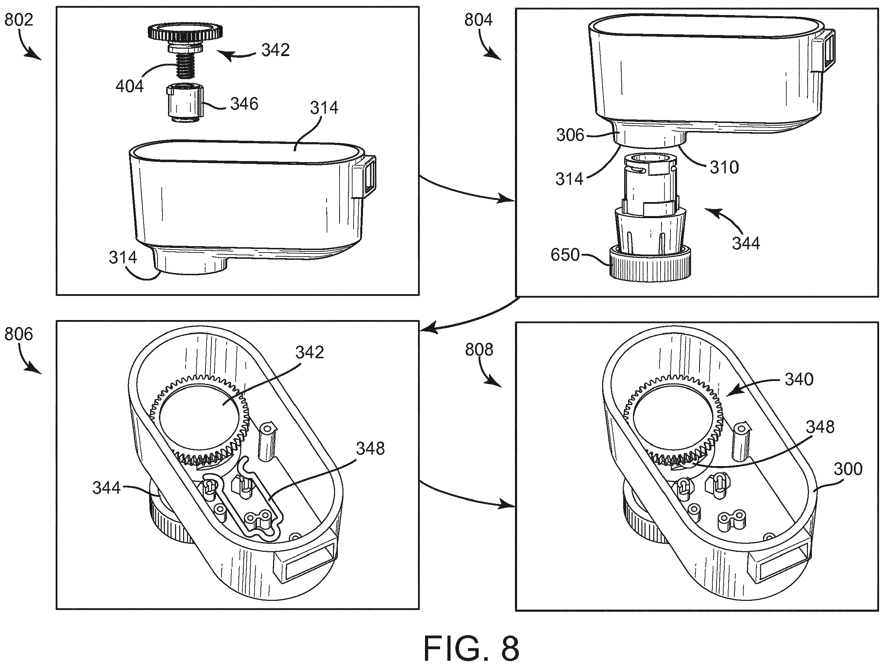

FIG. 8 depicts a method of installing the linkage assembly 340 on the actuator 300. In step 802, the stroke 346 is threaded onto the spindle 404 of the output gear 342, and the output gear 342 and the stroke 346 are inserted into the output channel 314 from the interior volume 304. In step 804, the yoke 344, coupled to the cuff 650, is inserted into the output channel 314 via the opening 307 at the exterior end 310 of the outlet wall 306. In the process, the stroke 346 and the spindle 404 are received by the yoke 344. In step 806, the circumferential slot 408 of the output gear 342 and the pair of slots 608 of the yoke 344 are aligned to receive the spring clip 348. In step 808, the spring clip 348 is flexed open to be inserted into the slots 408, 608, is inserted into the slots, and is released to allow the side rods 704 to spring back to a parallel orientation. The linkage assembly 340 may thereby be installed in the actuator 300 in a limited number of steps without any specialty tools. The linkage assembly 340 may also be disassembled by carrying out the installation steps in reverse, allowing for simple disassembly without breaking any components.

### Quick Fit Assembly for an Actuator

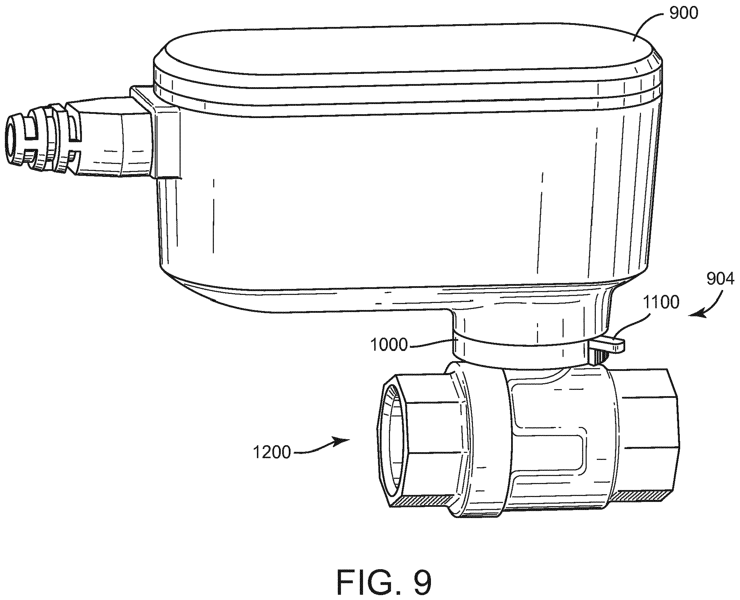

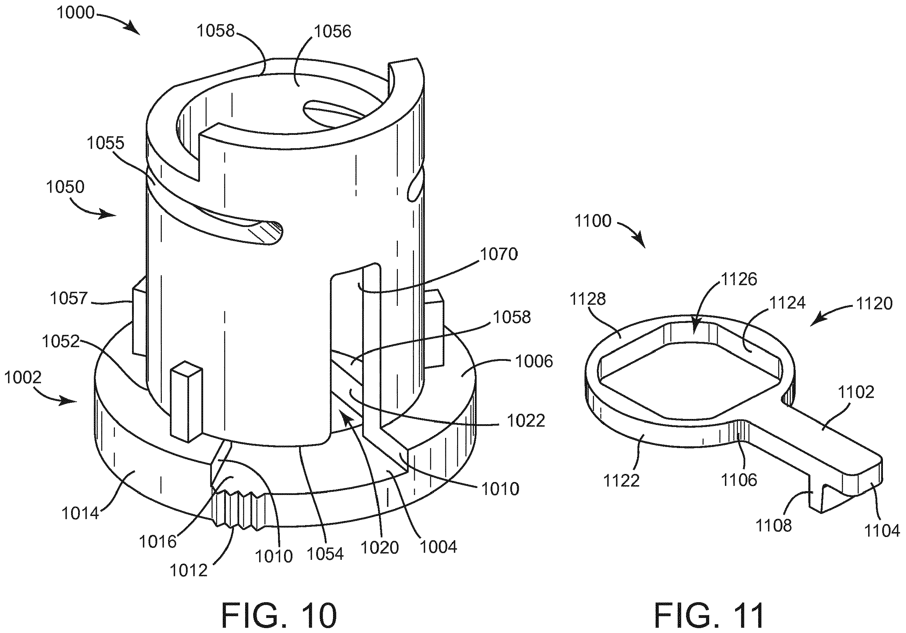

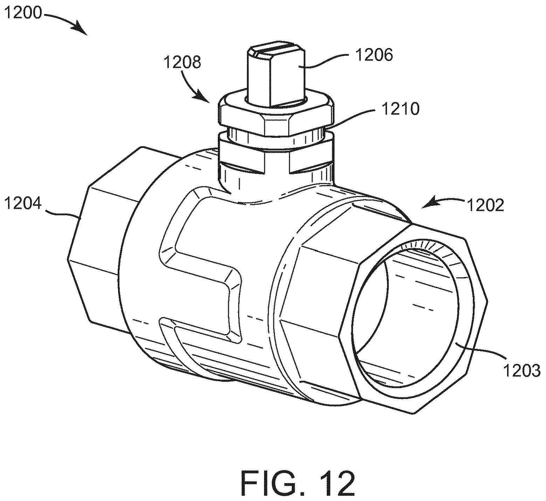

FIG. 9 shows an actuator 900, a valve body 1200, and a quick fit assembly 904, according to an exemplary embodiment. The valve body 1200, described in detail below with reference to FIG. 12, is coupled to the actuator by quick fit assembly 904. The quick fit assembly 904 includes a yoke 1000 and a lock clip 1100, described in detail below with reference to FIGS. 10-11 and 13-14.

Referring now to FIG. 10, a perspective view of the yoke 1000 is shown, according to an exemplary embodiment. Yoke 1000 may include any or all features of the yoke 344 as shown in FIGS. 3, 6, and 8, or the adaptor 150 as shown in FIGS. 1-2. The yoke 1000 includes a base ring 1002. The base ring 1002 has a first section 1004 and a second section 1006, where the thickness of the first section 1004 is less than the thickness of the second section 1006. A pair of section walls 1010 separates the first section 1004 from the second section 1006. Teeth 1012 protrude from an outer surface 1014 of the ring 1002, and are positioned proximate a first end 1016 of the first section 1004 (i.e., proximate one of the section walls 1010). A polygonal opening 1020 is defined by a polygonal wall 1022 and extends through the base ring 1002. As used herein, polygonal refers to a shape having more than one side, and includes shapes with curved sides or curved corners, as well as shapes with straight sides or sharp corners, or any combination thereof.

A yoke cylinder 1050 extends from the base ring 1002, and may be substantially cylindrical. More particularly, a base end 1052 of the yoke cylinder 1050 is set against the thicker second section 1006 of the base ring 1002, creating a gap 1054 between the first section 1004 and the base end 1052. The yoke cylinder 1050 defines a cylindrical yoke channel 1056 with circular openings 1058. The circular openings 1058 may be slightly larger than the polygonal opening 1020 of the base ring 1002. The polygonal wall 1022 thus blocks a portion of one of the circular openings 1058. The yoke cylinder 1050 is traversed by passage 1070. Passage 1070 may be substantially aligned with a second end 1018 of the first section 1004, and is connected to the gap 1054.

The yoke cylinder 1050 may include features such as slots 1055 and ribs 1057 that engage components of the actuator 900 to secure the yoke 1000 in the cylinder. Discussion above with reference to FIGS. 1-8 discloses such features, according to some embodiments.

Referring now to FIG. 11, the lock clip 1100 is shown, according to an exemplary embodiment. The lock clip 1100 has an arm 1102. The arm 1102 has a free end 1104 and a connected end 1106. A tab 1108 protrudes from the arm 1102 proximal the free end 1104. The tab 1108 protrudes in a direction substantially orthogonal to a longitudinal axis of the arm. The thickness of the arm 1102 may be equal to or slightly less than the difference in thickness between the first section 1004 and the second section 1006 of the base ring 1002, such that the arm 1102 can extend through the gap 1054.

A lock ring 1120 extends from the connected end 1106 of the arm 1102. The lock ring 1120 has a substantially circular outer rim 1122 and a polygonal inner wall 1124. The polygonal inner wall 1124 defines a lock ring channel 1126. The lock ring channel 1126 and the polygonal inner wall 1124 have a cross-sectional shape substantially the same as the polygonal opening 1020 of the base ring 1002. The outer rim 1122 may be shaped and sized substantially the same as the circular openings 1058. A lock body 1128 connects the outer rim 1122 to the polygonal inner wall 1124.

The lock clip 1100 is configured to be received by the yoke 1000. Passage 1070, shown in FIG. 10, facilitates the insertion of the lock clip 1100 into the yoke 1000. The outer rim 1122 may be aligned with the circular opening 1058, with the lock ring 1120 disposed inside the yoke cylinder 1050. The lock clip 1100 may be set on the base ring 1002, with the arm 1102 resting on the first section 1004, and the lock ring 1120 resting on the polygonal wall 1022. The arm 1102 is confined to rotate within the first section 1004 by the section walls 1010.

Referring now to FIG. 12, the valve body 1200 of FIG. 9 is shown, according to an exemplary embodiment. The valve body 1200 includes a tube 1202 with two open ends 1203, 1204. In some embodiments, the valve body 1200 may also include more open ends. A valve positioned within the tube 1202 controls the flow of liquid or gas from open end 1203 to open end 1204 or vice versa. The valve is actuated by a rotation of knob 1206 protruding from the valve body 1200. The rotation may be provided by actuator 900 shown in FIG. 9. A valve stem 1208 is positioned around the knob 1206 and is configured to be connected to quick fit assembly 904. The valve stem 1208 has a polygonal cross-sectional shape similar or equivalent to the shape of the polygonal opening 1020 of the base ring 1002 and the lock ring channel 1126 of the lock clip 1100. A slot 1210 runs circumferentially around the valve stem 1208.

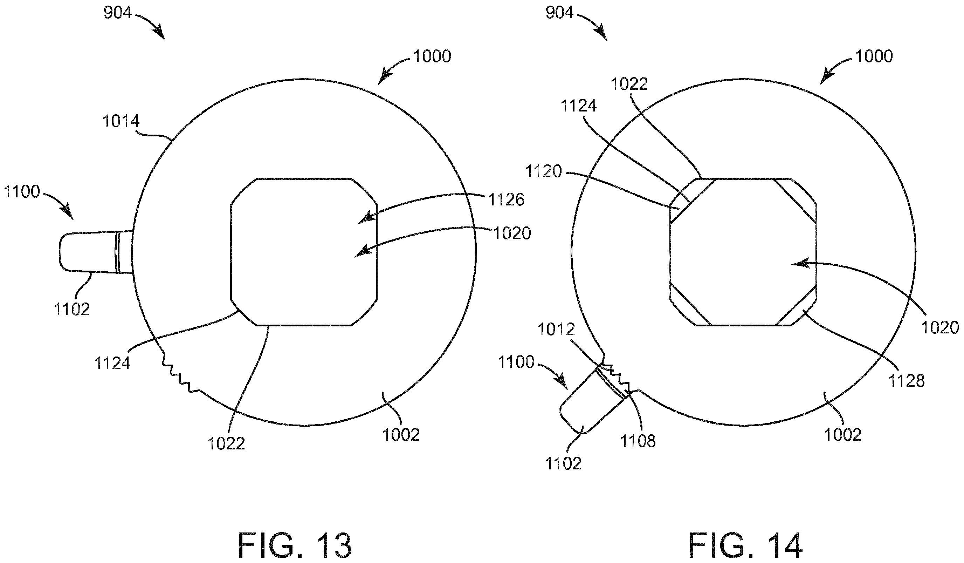

Referring now to FIG. 13 a bottom view of the quick fit assembly 904 with the lock clip 1100 in an unlocked position relative to the yoke 1000 is shown, according to an exemplary embodiment. The arm 1102 of the lock clip 1100 extends beyond the outer surface 1014 of the base ring 1002. In the unlocked position shown, the polygonal inner wall 1124 of the lock clip 1100 and the polygonal wall 1022 of the base ring 1002 are aligned, such that the lock ring channel 1126 and the polygonal opening 1020 of the base ring 1002 are aligned. In this unlocked position, the valve stem 1208 of FIG. 12 may be freely inserted into or removed from the quick fit assembly 904.

Referring now to FIG. 14, a bottom view of the quick fit assembly 904 with the lock clip 1100 in a locked position relative to the yoke 1000 is shown, according to an exemplary embodiment. The arm 1102 of the lock clip 1100 extends beyond the outer surface 1014 of the base ring 1002, and has been rotated from the unlocked position shown in FIG. 13 to be aligned with the teeth 1012. In the locked position, the tab 1108 engages the teeth 1012 to prevent the arm 1102 from rotating freely. In some embodiments, the tab includes ridges configured to engage the teeth 1012. The repositioning of the arm to the locked position also causes a rotation of the lock ring 1120, such that the inner polygonal inner wall 1124 of the lock clip 1100 and the polygonal wall 1022 of the base ring 1002 are misaligned. The lock body 1128 blocks part of the polygonal opening 1020 of the base ring 1002. In the locked position, the lock body 1128 may prevent the valve stem 1208 of FIG. 12 from being inserted into the quick fit assembly 904. If the valve stem 1208 is already received by the quick fit assembly 904 when the lock clip 1100 is rotated from the unlocked position to the locked position, the lock body 1128 may be received by the slot 1210. While in the slot 1210, the lock body 1128 prevents the valve stem 1208 from being removed from the quick fit assembly 904.

Referring generally to FIGS. 9-14, the quick fit assembly 904 allows for the quick connection and disconnection of the valve body 1200 and the actuator 900. To connect the valve body 1200 to the actuator 900, the arm 1102 is rotated to the unlocked position as shown in FIG. 13. The valve stem 1208 is inserted into the polygonal opening 1020. The polygonal shapes of the valve stem 1208 and the polygonal opening 1020 can engage one another to prevent the valve stem from rotating relative to the actuator 900 while the valve stem 1208 is received by the quick fit assembly 904. The arm 1102 is then rotated to the locked position shown in FIG. 14. The lock body 1128 is received in the slot 1210, and engages the slot 1210 to secure the valve stem 1208 in the quick fit assembly 904. The knob 1206 of the valve body 1200 is securely positioned to engage with the actuator 900. The teeth 1012 restrict the arm 1102 from rotating back to the open position without a force applied by a user. The valve body 1200 is thereby quickly connected to the actuator 900 without any specialty tools. The valve body 1200 can additionally be quickly disconnected from the actuator 900 by rotating the arm 1102 to the open position.

### Adaptor for Actuator and Ball Valve Assembly

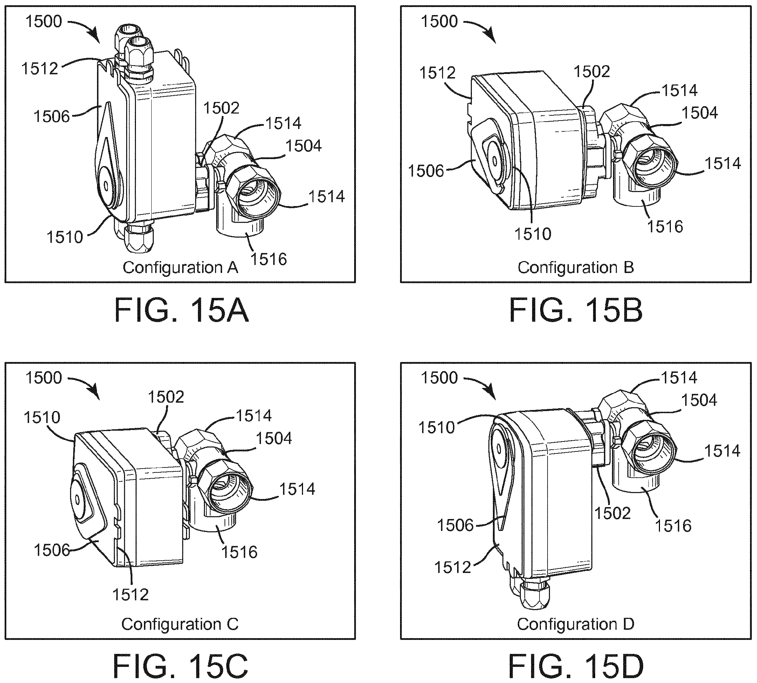

Referring now to FIGS. 15A-D, an actuator and ball valve assembly 1500 is shown in four possible installation configurations, according to an exemplary embodiment. The actuator and ball valve assembly includes a bracket 1502, a ball valve 1504, and an actuator 1506. Each actuator has a longitudinal axis extending from a first end 1510 to a second end 1512. The ball valve 1504 may be coupled to the actuator near the first end 1510. The ball valve 1504 may be a T-shaped three-way ball valve with two aligned ports 1514 and a perpendicular port 1516. In some embodiments, the ball valve 1504 may be a two-way ball valve or other any type of valve.

The bracket 1502 is configured to couple the ball valve 1504 to an actuator 1506 in four configurations, shown as Configuration A (FIG. 15A), Configuration B (FIG. 15B), Configuration C (FIG. 15C), and Configuration D (FIG. 15D). The orientation of the ball valve 1504 relative to the actuator is different in each Configuration A-D. For example, in Configuration A, the perpendicular port 1516 extends away from the first end of the actuator 1506 and is aligned parallel to the longitudinal axis of the actuator 1506, while Configurations B and C show the perpendicular port 1516 aligned perpendicular to the longitudinal axis of the actuator 1506. Configuration D has the perpendicular port 1516 aligned parallel to the longitudinal axis of the actuator 1506 but extending towards the second end 1512 of the actuator 1506.

Although the bracket 1502, the ball valve 1504, and the actuator 1506 are configured such that they can be coupled together in all four configurations, the actuator and ball valve assembly 1500 only functions properly in one of the configurations, for example Configuration D. That is, in Configuration D, the actuator 1506 can reposition mechanisms in the ball valve 1504 to selectively permit or prevent a variety of flows through the ball valve 1504 via the aligned ports 1514 and the perpendicular port 1516. In Configurations A, B, and C, the actuator cannot properly interface with the ball valve to actuate mechanisms in the ball valve 1504. Installation of the ball valve 1504 and the actuator 1506 in the correct configuration (e.g., Configuration D) is therefore critical to proper functioning of the actuator and ball valve assembly 1500, but is not ensured because the bracket 1502 is configured to couple the ball valve 1504 to the actuator 1506 in three incorrect configurations as well (e.g. Configurations A-C).

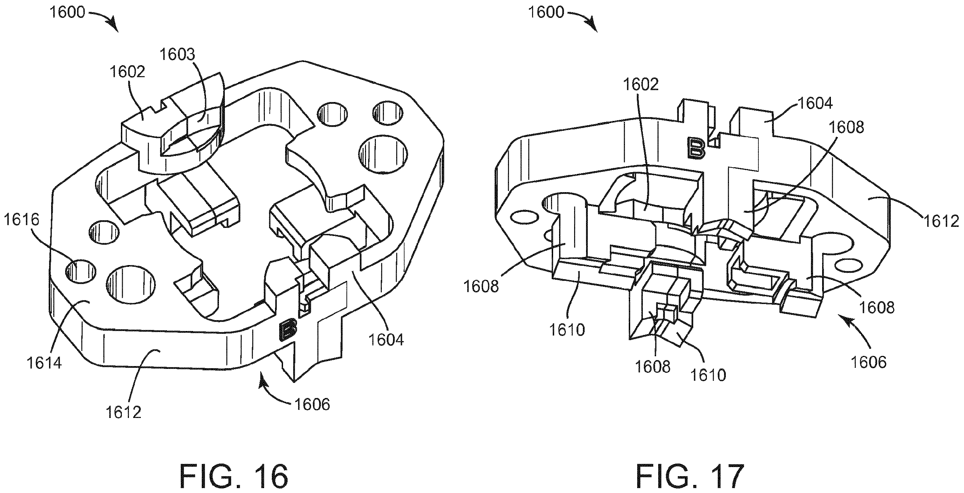

Referring now to FIGS. 16 and 17, perspective views of an adaptor 1600 are shown, according to an exemplary embodiment. The adaptor 1600 is configured to prevent the ball valve 1504 from being coupled to the actuator 1506 in an incorrect orientation, and to permit the ball valve 1504 to be coupled to the actuator 1506 in the correct orientation. The adaptor 1600 includes a first feature 1602 that ensures that the adaptor 1600 can only be positioned in a specific orientation relative to the bracket 1502. The first feature 1602 is shown with a curve 1603 designed to interface with the bracket 1502 in only one orientation. The adaptor 1600 may include a cleat 1604 that allows the adaptor 1600 to clip onto or otherwise engage the bracket 1502. The adaptor 1600 also includes a second feature 1606 that ensures that adaptor 1600 can only be positioned in a particular orientation relative to the ball valve 1504. The second feature 1606 is shown as including multiple projections 1608 designed to interface with the ball valve 1504 in only one orientation, for example by including a triangular end portion 1610. Each of the multiple projections 1608 may be different, or some or all of the multiple projections 1608 may be a copy, reflection, or rotation of another projection 1608. In general, the first feature 1602 and the second feature 1606 may include any combination of protrusions, projections, curves, tabs, clips, slots, members, points, pins, or other physical structures that correspond to the physical features of the ball valve 1504 and the bracket 1502 and are configured to limit the possible orientations of the ball valve 1504 relative to the bracket 1502. In some embodiments, the second feature 1606 is configured to ensure a particular orientation for a plurality of valve types or other mechanisms, for example a two-way valve and a three-way valve.

The adaptor 1600 also includes a structure 1612 that joins the first feature 1602 to the second feature 1606. Structure 1612 is shown as with an octagonal body 1614 including holes 1616. A channel 1620 extends through the structure 1612. The channel 1620 allows portions of the bracket 1502 and the ball valve 1504 to pass through the adaptor 1600. The channel 1620 allows the bracket 1502 to couple the ball valve 1504 to the actuator 1506 in the same manner as without the adaptor 1600. That is, the adaptor 1600 ensures a correct orientation of the ball valve 1504 relative to the actuator 1506, but does not otherwise alter how the actuator 1506, bracket 1502, and ball valve 1504 are connected.

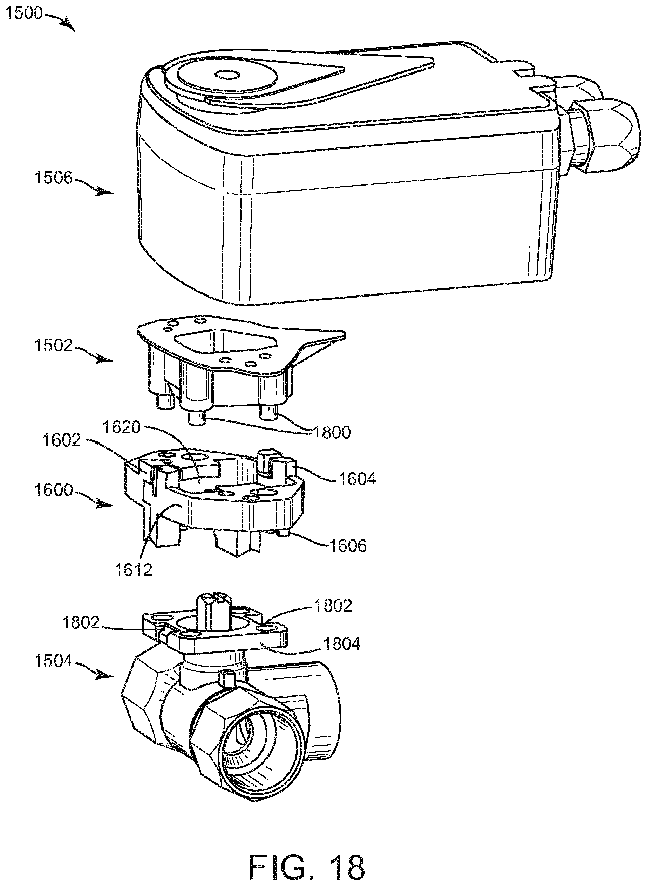

Referring now to FIG. 18, an actuator and ball valve assembly 1500 with an adaptor 1600 is shown, according to an exemplary embodiment. FIG. 18 illustrates that the adaptor 1600 may be positioned between the bracket 1502 and the ball valve 1504. The first feature 1602 and the cleat 1604 interface with the bracket 1502, preventing the adaptor 1600 from engaging the bracket 1502 in all but a specific orientation. The bracket 1502 is shown to include pegs 1800. Pegs 1800 may extend through the channel 1620 to engage the ball valve 1504.

The second feature 1606, extending in an opposite direction from the structure 1612 than the first feature 1602, interfaces with the ball valve 1504. For example, the second feature 1606 may engage a slot or slots 1802 in a connecting portion 1804 of the ball valve 1504. The connecting portion 1804 may be received, at least in part, within the adaptor 1600 and the channel 1620.

The adaptor 1600 thereby ensures that the bracket 1502 couples the ball valve 1504 to the actuator 1506 in the correct orientation (e.g., Configuration D as shown in FIG. 15D). The adaptor 1600 does not bear substantial weight, and is not integral in transferring a torque, force, or other energy from the actuator 1506 to the ball valve 1504 or vice versa. The adaptor 1600 may therefore be manufactured from inexpensive materials.

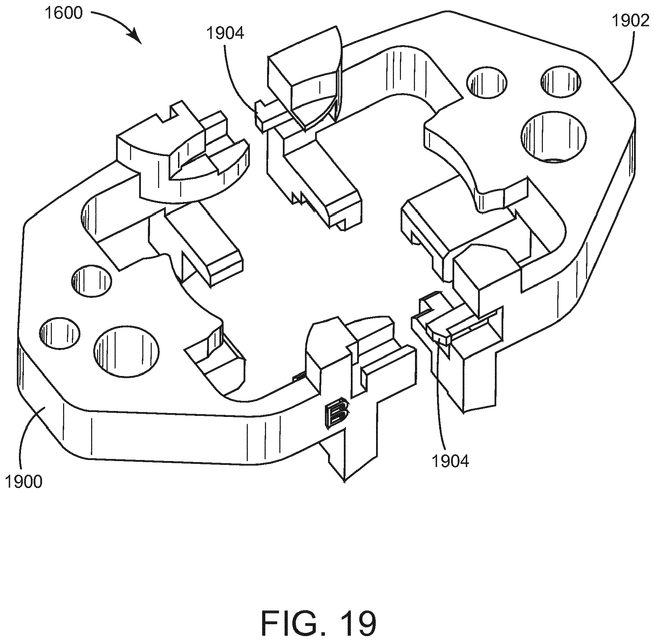

Referring now to FIG. 19, the adaptor 1600 is shown with a snapping feature, according to an exemplary embodiment. The adaptor 1600 is made up of a first section 1900 and a second section 1902 joined by a snapping feature 1904. The snapping feature 1904 allows sections 1900, 1902 to be joined together while in use to install the ball valve 1504 on the actuator 1506. The snapping feature may also allow the first section 1900 to be disconnected from the second section 1902 after the ball valve 1504 is coupled to the actuator 1506 to facilitate the removal of the adaptor 1600 from between the ball valve 1504 and the bracket 1502. The adaptor 1600 may then be reused in the setup of additional actuator and ball valve assemblies.

### Configuration of Exemplary Embodiments

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements can be reversed or otherwise varied and the nature or number of discrete elements or positions can be altered or varied. Accordingly, all such modifications are intended to be included within the scope of the present disclosure. Other substitutions, modifications, changes, and omissions can be made in the design, operating conditions and arrangement of the exemplary embodiments without departing from the scope of the present disclosure

## Claims

1. An actuator comprising:
- a body having an output channel defined by a channel wall, the channel wall having one or more grooves;
- an output gear having a snapping feature; and
- an adaptor comprising:
- a cylinder defined by an adaptor wall and configured to be received by the output channel;
- one or more protrusions protruding from the adaptor wall and configured to engage the one or more grooves; and
- a snapping structure positioned at an actuator end of the cylinder, the snapping structure configured to receive the snapping feature of the output gear.

2. The actuator of claim 1,
wherein the output gear further comprises a cog and a spindle, and wherein the cylinder is configured to receive the spindle when the snapping structure receives the snapping feature.

3. The actuator of claim 2,
wherein the snapping structure is configured to engage the snapping feature to rotatably secure the output gear to the adaptor.

4. The actuator of claim 1, 2, or 3,
wherein the one or more protrusions engage the one or more grooves to secure the adaptor in the output channel when the output channel receives the adaptor; and/or
wherein the adaptor wall abuts the channel wall to prevent a fluid from entering the body via the output channel when the output channel receives the adaptor.

5. An actuator comprising:
- a body having an output channel defined by an output wall;
- an output gear having a cog, a middle portion, and a spindle, the middle portion positioned between the cog and the spindle and having a circumferential slot;
- a yoke extending through the output channel, the yoke having a first end inside the body and a yoke slot proximate the first end, the yoke configured to receive the middle portion and the spindle; and
- a spring clip configured to engage the yoke slot and the circumferential slot to rotatably secure the output gear to the yoke.

6. The actuator of claim 5, wherein the spring clip comprises:
- an open end;
- a closed end opposite the open end;
- a pair of substantially parallel side rods extending from the open end to the closed end;
- a curved end portion joining the side rods at the closed end; and
- a pair of semicircular hooks, each extending from one of the side rods,
wherein the side rods are preferably configured to be received by the yoke slot and the circumferential slot.

7. The actuator of claim 5 or 6,
wherein the side rods are configured to flex apart under a force to widen the opening, and wherein the spring clip has a springing quality that returns the side rods to a substantially parallel configuration when the force is absent.

8. The actuator of claim 7, further comprising a stroke configured to be received by the yoke, the stroke comprising:
- a threaded core configured to engage the spindle;
- an exterior surface; and
- a rib protruding from the exterior surface.

9. An assembly for use with an actuator and valve, comprising:
- a yoke, comprising:
- a base ring;
- a polygonal opening extending through the base ring; and
- a yoke cylinder extending from the base ring; and
- a lock clip positioned proximal the base ring, the lock clip comprising:
- an arm having a free end and a connected end; and
- a lock ring positioned within the yoke cylinder and comprising a substantially circular outer rim and an inner wall shaped to correspond to the polygonal opening, the lock ring extending from the connected end of the arm.

10. The assembly of claim 9,
wherein the lock ring is configured to rotate around an axis of the yoke cylinder between an unlocked position and a locked position; wherein the inner wall of the lock ring aligns with the polygonal opening in the unlocked position, and
wherein the inner wall of the lock ring is misaligned with the polygonal opening in the locked position such that a portion of the lock clip protrudes into the polygonal opening.

11. The assembly of claim 10,
wherein the base ring further comprises teeth protruding from a circumferential surface of the base ring, wherein the lock clip further comprises a tab protruding from the arm; and
wherein the tab engages the teeth when the lock clip is in the locked position; and/or
wherein the polygonal opening is configured to receive a stem extending from a valve body; and wherein the lock clip engages the stem to secure the valve body to the yoke when the polygonal opening receives the stem and the lock clip is in the locked position, wherein the yoke preferably further comprises linkage features that allow the yoke to be coupled to an actuator.

12. An actuator and valve assembly, comprising:
- an actuator;
- a bracket coupled to the actuator and configured to couple a valve to the actuator in a correct orientation and one or more incorrect orientations; and
- an adaptor positioned between the valve and the bracket, wherein the adaptor prevents the valve from being coupled to the actuator in the one or more incorrect orientations and permits the valve to be coupled to the actuator in the correct orientation.

13. The actuator and valve assembly of claim 12,
wherein the adaptor comprises:
- a first feature that ensures that the adaptor can only be positioned in a specific orientation relative to the bracket;
- a second feature that ensures that the adaptor can only be positioned in a particular orientation relative to the valve; and
- a structure that connects the first feature and the second feature.

14. The actuator and valve assembly of claim 13,
wherein the adaptor further comprises a channel through the structure that allows the bracket to couple the valve to the actuator.

15. The actuator and valve assembly of claim 14,
wherein the channel substantially prevents the adaptor from interfering with a transfer of force from the actuator to the valve; and/or wherein the adaptor is formed from two sections secured together by a snapping feature.
